# EUROPÄISCHE PATENTANMELDUNG

(11) **EP 0 692 665 A1**
(43) Veröffentlichungstag der Anmeldung: **17.01.1996**
(21) Anmeldenummer: 95102918.0
(22) Anmeldetag: 01.03.1995
(51) Int. Cl.: F16L 27/12, F16L 47/00

(54) **Kompensator für Rohrleitungen**

(30) Priorität: 14.07.1994 DE 4424921
(71) Anmelder: RAFELD KUNSTSTOFFTECHNIK GmbH & Co. KG, D-87640 Ebenhofen (DE)
(72) Erfinder: Birke, Karl, D-87640 Ebenhofen (DE)
(74) Vertreter: Kern, Wolfgang, Dipl.-Ing.

(57) **Zusammenfassung**

Kompensator für Rohrleitungen, der mittels endseitiger Flansch- und/oder Schraubverbindungen in eine auf Grund von Druck- und Temperaturänderungen Längenänderungen unterliegende Rohrleitung zwecks Ausgleichs solcher Längenänderungen einbaubar ist, mit einem Außenrohr und einem in diesem längsbeweglich gelagerten und in bezug auf das Außenrohr abgedichteten Innenrohr und mit Kraftübertragungsmittel, die der Längsverschiebung der beiden Rohre in bezug aufeinander entgegenwirken.

Der Kompensator dient zum Ausgleich von Rohrlängenänderungen infolge Druck- und Temperaturänderungen im Rohrleitungssystem, in das er eingebaut wird und weist zu diesem Zweck ein Außenrohr (2), bestehend aus zwei Außenrohrteilen (2a, 2b) unterschiedlichen Durchmessers, und ein Innenrohr (3) auf, das in dem Außenrohr gleitend gelagert ist und auf dem sich ein doppelt wirkender Kolben (4) befindet, der gegen die innere Oberfläche (5) des einen Außenrohrteils (2b) abgedichtet ist und auf ihr gleitet und den von der inneren Oberfläche dieses Außenrohrteils und der äußeren Oberfläche (6) des Innenrohres (3) einerseits und den beiden entgegengesetzten Stirnseiten (7, 8) des doppelt wirkenden Kolbens (4) andererseits umschlossenen Hohlraum in zwei Abschnitte (9, 10) unterteilt, von denen der eine Hohlraumabschnitt (9) über wenigstens eine Bohrung (12) in der Wandung (13) des Innenrohres (3) mit dem Innenraum (15) des Innenrohres in Verbindung stellt und der andere Hohlraumabschnitt (10) über wenigstens eine Bohrung (11) in der Wandung des Außenrohrteils (26) mit der äußeren Atmosphäre in Verbindung steht.

## Beschreibung

Die Erfindung betrifft einen Kompensator für Rohrleitungen gemäß dem Oberbegriff des Anspruches 1 und insbesondere einen solchen Kompensator, der aus Kunststoff beispielsweise Polypropylen, besteht.

Derartige Kompensatoren, die mittels endseitiger Flansch- und/oder Schraubverbindungen in Rohrleitungen einbaubar sind, um deren Längenänderungen zu kompensieren, sind mit einem Außerrohr und einem in diesem längsbeweglich gelagerten und in bezug auf das Außenrohr abgedichteten Innenrohr sowie mit Kraftübertragungsmitteln versehen. Die Längenänderungen der Rohrleitung werden durch Materialdehnungen verursacht, die in Abhängigkeit von Druck und Temperatur der in den Rohrleitungen zu transportierenden Medien, beispielsweise Warmwasser für Gebäudeheizungen, beträchtlich sein können und daher, falls keine Kompensatoren eingebaut würden, zu unerwünschten Ausbauchungen und anderweitigen Verformungen der Rohrleitung führen wurden. Um der Längsverschiebung der beiden ineinandergesteckten Rohre des Kompensators entgegenzuwirken, werden bisher Federelemente benutzt, die zwischen Rohrleitungsenden, zwischen denen der Kompensator eingebaut ist, gespannt sind. Eine solche Konstruktion ist jedoch weht nur aufwendig, sondern auch nicht besonders betriebssicher, da die Federelemente in der Regel freiliegen und deshalb beschädigt werden können. Darüber hinaus ist die Kraftentfaltung dieser Federelemente von der Federkennlinie abhängig und deshalb gewöhntlich nicht proportional.

Die Aufgabe der Erfindung besteht deshalb darin, den Kompensator der eingangs genannten Art so auszubilden, daß auf derartige Federelemente verzichtet werden kann und darüber hinaus die Konstruktion des Kompensators erheblich vereinfacht wird, seine Wirkung hingegen proportional der an seinen Enden eingeleiteten Dehnungskräfte ist, denen die Rohrleitung unterliegt. Schließlich sollmit der erfindungsgemäßen Konstruktion erreicht werden, daß der Kompensator unabhängig von dem jeweiligen Systemdruck arbeitet, d. h. sich an sich ändernde Dehnungsverhältnisse aufgrund von sich ändernden Temperaturen und Drucken des in der Rohrleitung geförderten Mediums jeweils anpaßt. Letzteres ist bei dem bekannten Kompensator, der mit Zug- bzw. Spannfedern arbeitet, nicht der Fall, da diese Federn jeweils nur für einen bestimmten Systemdruck ausgelegt sind und bei sich änderndem Druck ausgetauscht werden müßten. Ein solcher Austausch ist aber entweder überhaupt nicht vorgesehen oder wird in den Fällen, in denen zu diesem Zweck weitere Federsätze mit anderen Federsteifigkeiten zur Verfügung stehen, in der Regel aus Bequemlichkeitsgründen nicht vorgenommen, so daß der Kompensator dann nicht optimal arbeitet.

Zur Lösung der Erfindungsaufgabe wird deshalb vorgeschlagen, daß das Außenrohr aus zwei Rohrteilen unterschiedlichen Innendurchmessers zusammengesetzt ist, in denen das Innenrohr gleitend gelagert ist, aufdem sich ein doppeltwirkender Kolben befindet, der gegen die innere Oberfläche des einen Außenrohrteiles abgedichtet ist und auf ihr gleitet und den von der inneren Oberfläche dieses Außenrohrteils und der äußeren Oberfläche des Innenrohres einerseits und den beiden entgegengesetzten Stirnseiten des doppeltwirkenden Kolbens andererseits umschlossenen Hohlraum in bei Abschnitte unterteilt, von denen der eine Hohlraumabschnitt über wenigstens eine Bohrung in der Wandung des Innenrohres mit dem Innenraum des Innenrohres in Verbindung steht und der andere Hohlraumabschnitt über wenigstens eine Bohrung in der Wandung des Außenrohrteils mit der äußeren Atmosphäre in Verbindung steht.

Der erfindungsgemäße Kompensator arbeitet somit unabhängig von jeglichen Federelementen und paßt sich dabei ohne weiteres an sich ändernde Druck- und Temperaturverhältnisse des Rohrleitungsystems an, so daß beispielsweise bei der Heizwasserversorgung in mehrgeschossigen Gebäuden durch Einbau derartiger Kompensatoren in das Rohrleitungssystem von Stockwerk zu Stockwerk die in den Heizungsrohren erforderliche Druckkompensation vorgenommen werden kann.

Es hat sich als vorteilhaft erwiesen, das Innenrohr und auch das Außenrohr aus Kunststoff beispielsweise Polypropylen, herzustellen und darüber hinaus den einen Außenrohrteil in den anderen einzusetzen und mit der Stirnfläche seines eingesetzten Endes einen Anschlag für die Bewegung des doppeltwirkenden Kolbens bilden zu lassen.

Zweckmäßigerweise ist der doppeltwirkende Kolben integraler Bestandteil des Innenrohres und etwa in der Mitte der Länge des Innenrohres angeordnet.

Es hat sich ferner als besonders zweckmäßig erwiesen, die den einen Hohlraumabschnitt mit dem Innenraum des Innenrohres verbindende wenigstens eine Bohrung unmittelbar vor der einen Stirnseite des Kolbens anzuordnen und die den anderen Hohlraumabschnitt mit der äußeren Atmosphäre verbindende wenigstens eine Bohrung unmittelbar vor der Stirnfläche des entgegengesetzten Endes des Außenrohrteils anzuordnen.

Das eine Ende des Innenrohres ist zweckmäßigerweise durch in seiner Wandung angeordnete Dichtungselemente gegen die Innenwand des einen Außenrohrteils abgedichtet und liegt bei an der Stirnfläche des entgegengesetzten Endes des Außenrohrteils anstoßenden Kolben noch innerhalb des Außenrohrteils, während das andere Ende des Innenrohres über das Ende des Außenrohrteils hinausragt und in einer mit Dichtungselementen versehenen Buchse innerhalb des Außenrohrteils geführt ist. Weitere vorteilhalte Ausgestaltungen sind den Unteransprüchen zu entnehmen.

Die Erfindung wird nachfolgend anhand des in der Zeichnung dargestellten Ausführungsbeispiels näher erläutert. In der Zeichnung zeigen:
- Fig.1: eine verkleinerte Längsschnittansicht des Kompensators,
- Fig.2: eine vergrößerte Darstellung der rechten Hälfte des Kompensators von Fig.1 und
- Fig.3: eine vergrößerte Darstellung der linken Hälfte des Kompensators von Fig.1.

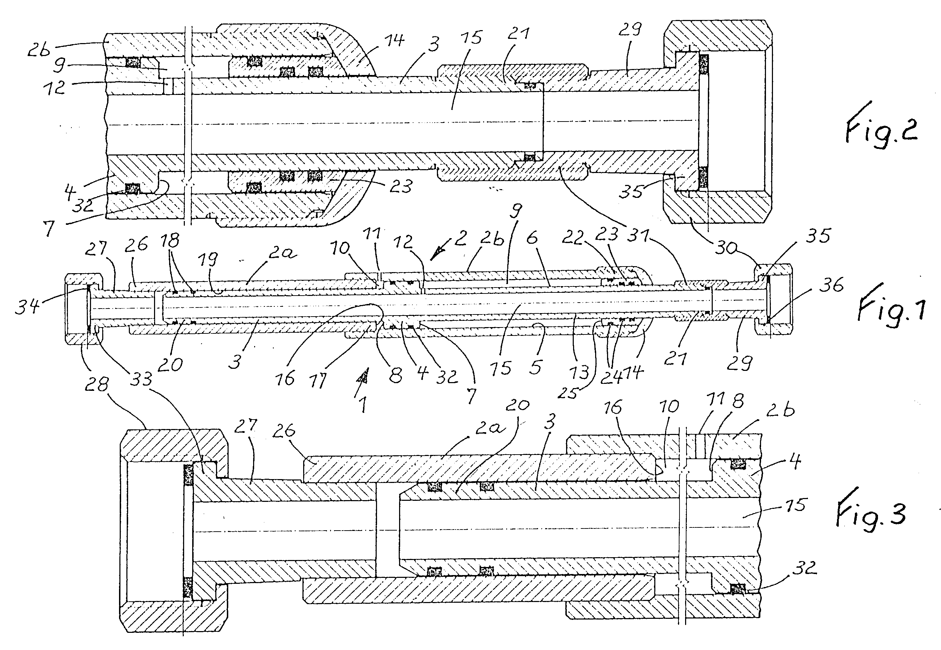

Der in den Fig.1 bis 3 dargestellte Kompensator wird in Rohrleitungen eingebaut und dient zur Kompensation der in diesen Rohrleitungen herrschenden Drucke bzw. der durch die herrschenden Drücke und Temperaturen des in den Rohrleitungen geförderten Mediums, beispielsweise Heizungswasser, auf die Rohrleitung ausgeübten Längskräfte, die Dehnungen und damit Längenänderungen bewirken.

Der dargestellte Kompensator 1 besteht aus Kunststoff, beispielsweise Polypropylen, und weist ein Außenrohr 2 auf, das aus zwei miteinander verschweißten Außenrohrteilen 2a, 2b unterschiedlichen und Innendurchmessers besteht, sowie aus einem Innenrohr 3, das in dem Außenrohr gleitend gelagert ist und auf dem sich ein doppelt wirkender Kolben 4 etwa in der Mitte der Länge des Innenrohres 3 befindet, der mit letzterem eine bauliche Einheit bildet und durch Dichtungsringe 32 auf seinem Umfang gegen die innere Oberfläche 5 des einen Außenrohrteils 2b abgedichtet ist. Von der inneren Oberfläche 5 dieses Außenrohrteils 2b und der äußeren Oberfläche 6 des Innenrohres 3 einerseits und den beiden entgegengesetzten Stirnseiten 7, 8 des doppelt wirkenden Kolbens 4 andererseits wird ein Hohlraum begrenzt, der in die beiden Abschnitte 9 und 10 unterteilt ist, von denen der eine Hohlraumabschnitt 9 über eine Bohrung 12 in der Wandung 13 des Innenrohres 3 mit dem Innenraum 15 des Innenrohres in Verbindung steht, während der andere Hohlraumabschnitt 10 über eine Bohrung 11 in der Wandung des Außenrohrteils 2b mit der äußeren Atmosphäre in Verbindung steht.

Der eine Außenrohrteil 2a, der bei der beschriebenen Installation den kleineren Außendurchmesser aufweist, ist in den anderen Außenrohrteil 2b eingesetzt und bildet mit der Stirnfläche 16 seines eingesetzten Endes 17 einen Anschlag für die Bewegung des doppelt wirkenden Kolbens 4, die auf der inneren Oberfläche 5 des anderen, rechten Außenrohrteils 2b erfolgt, und zwar in Abhängigkeit von den in derartigen Kompensatoren angeschlossnen Rohrleitung herrschenden Druck bzw. der Temperatur des die Rohrleitungen durchströmenden Mediums.

Der Anschluß der Rohrleitung erfolgt an dem äußeren Ende 26 des Außenrohrteils 2a mit Hilfe eines Anschlußnippels 27, das mit diesem Ende fest verbunden ist und einen Endflansch 33 trägt, der von einem Kupplungsstück 28 aus Metall hintergriffen wird, das mit einem Innengewinde versehen ist und somit auf das eine mit einem Außengewinde versehene Rohrleitungsende, das in der Zeichnung nicht dargestellt ist, aufgeschraubt werden kann. Ein Dichtungsring 34 stellt eine flüssigkeitsdichte Abdichtung her.

Das andere Rohrleitungsende wird mit dem im Außenrohr 2 beweglichen Innenrohr 3 über ein Anschlußnippel 29 verbunden, der seinerseits mit dem Ende 21 des Innenrohres 3 bei 31 verschraubt ist. Das Anschlußnippel 29 weist wiederum einen Endflansch 35 auf, der von einem Kupplungsstück 30 hintergriffen wird, dessen Innengewinde auf das nicht dargestellte Außengewinde des Rohrleitungsendes aufgeschraubt werden kann, um mit Hilfe des vorhandenen Dichtungsrings 36 eine flüssigkeitsdichte Verbindung herzustellen.

Der Hohlraumabschnitt 9 steht mit dem Innenraum 15 des Innenrohres 3 und damit mit dem durch das Innenrohr geförderte Medium über eine Bohrung 12 in Verbindung, die sich in der Wand 13 des Innenrohres unmittelbar vor der Stirnseite 7 des doppelt wirkenden Kolbens 4 befindet. Eine weitere Bohrung 11 verbindet den Hohlraumabschnitt 10 auf der anderen Seite des doppelt wirkenden Kolbens mit der äußeren Atmosphäre und ist zu diesem Zweck unmittelbar vor der Stirnfläche 16 des in den Außenrohrteil 2b eingesetzten Endes 17 des Außenrohrteils 2a angeordnet.

Das eine Ende 20 des Innenrohres 3 wird durch in seiner Wandung 13 befindliche Dichtungsringe 18 an der Innenwand 19 des linken Außenrohrteils 2a abgedichtet und ist im Hinblick auf seinen Abstand von dem Kolben 4 so angeordnet, daß es bei an der Stirnfläche 16 des eingesetzten Endes 17 des Außenrohrteils 2a anstoßendem Kolben 4 noch innerhalb dieses Außenrohrteils liegt, wobei auf seiner Oberfläche Dichtungsringe 18 eine Abdichtung gegenüber der inneren Oberfläche 19 des Außenrohrteils 2a herstellen.

Was das andere Ende 22 des Außenrohrteils 2b anbelangt, so sitzt in diesem eine Buchse 23, durch die hindurch sich das Innenrohr zum Außenrohr 2 heraus erstreckt und die durch Dichtungsringe 24 sowohl gegen die innere Oberfläche 5 des Außenrohrteils 2b als auch gegen die äußere Oberfläche des Innenrohres abgedichtet ist, so daß sich das Innenrohr frei durch diese Buchse 23 hindurchbewegen kann, sobald der Druck im Innenraum 15 gegenüber dem im Hohlraumabschnitt 9 herrschenden Druck sinkt. In diesem Fall strömt das in dem Hohlraumabschnitt 9 befindliche Medium durch die Bohrung 12 in den Innenraum 15 zurück, und der doppelt wirkende Kolben 4 bewegt sich nach rechts, wobei gleichzeitig durch die Bohrung 11 Außenluft in den Hohlraumabschnitt 10 eindringt.

Die eine Stirnfläche 25 der Buchse 23, die der einen Stirnseite 7 des Kolbens 4 gegenüberliegt, dient letzterer als Anschlag bei der Bewegung des Innenrohres in bezug auf das Außenrohr, wodurch der maximale Weg des Kompensators festgelegt ist, der dem Abstand zwischen der Stirnseite 7 des Kolbens 4 und der Stirnfläche 25 der Buchse 23 entspricht, wenn die Stirnseite 8 des Kolbens 4 an der Stirnfläche 16 des eingesetzten Endes 17 des Außenrohrteils 2a anliegt.

Das rechte Ende 22 des Außenrohrteils 2b und damit die in diesen Außenrohrteil eingesetzte Buchse 23 werden von einer auf diesen Außenrohrteil aufschraubbaren Kappe 14 abgedeckt.

## Patentansprüche

1. Kompensator für Rohrleitungen, der mittels endseitiger Flansch- und/oder Schraubverbindungen in eine auf Grund von Druck- und Temperaturänderungen Längenänderungen unterliegende Rohrleitung zwecks Ausgleichs solcher Längenänderungen einbaubar ist, mit einem Außenrohr und einem in diesem längsbeweglich gelagerten und in bezug auf das Außenrohr abgedichteten Innenrohr und mit Kraftübertragungsmittel, die der Längsverschiebung der beiden Rohre in bezug aufeinander entgegenwirken, **dadurch gekennzeichnet,** daß das Außenrohr (2) aus zwei Rohrteilen (2a, 2b) unterschiedlichen Innendurchmessers zusammengesetzt ist, in denen das Innenrohr (3) gleitend gelagert ist, auf dem sich ein doppeltwirkender Kolben (4) befindet, der gegen die innere Oberfläche (5) des einen Außenrohrteiles (2b) abgedichtet ist und auf ihr gleitet und den von der inneren Oberfläche (5) dieses Außenrohrteils (2b) und der äußeren Oberfläche (6) des Innenrohres (3) einerseits und den beiden entgegengesetzten Stirnseiten (7, 8) des doppeltwirkenden Kolbens (4) andererseits umschlossenen Hohlraum in zwei Abschnitte (9, 10) unterteilt, von denen der eine Hohlraumabschnitt (9) über wenigstens eine Bohrung (12) in der Wandung (13) des Innenrohres (3) mit dem Innenraum (15) des Innenrohres in Verbindung steht und der andere Hohlraumabschnitt (10) über wenigstens eine Bohrung (11) in der Wandung des Außenrohrteils (2b) mit der äußeren Atmosphäre in Verbindung steht.

2. Kompensator nach Anspruch 1, **dadurch gekennzeichnet, daß** das Innenrohr (3) und das Außenrohr (2) aus Kunststoffbestehen.

3. Kompensator nach den Ansprüchen 1 und 2, **dadurch gekennzeichnet, daß** der eine Außenrohrteil (2a) in den anderen Außenrohrteil (2b) eingesetzt ist und mit der Stirnfläche (16) seines eingesetzten Endes (17) einen Anschlag für die Bewegung des doppelt wirkenden Kolbens (4) bildet.

4. Kompensator nach einem der Ansprüche 1 bis 3, **dadurch gekennzeichnet, daß** der doppelt wirkende Kolben (4) integraler Bestandteil des Innenrohres (3) ist.

5. Kompensator nach einem der Ansprüche 1 bis 4, **dadurch gekennzeichnet, daß** der doppelt wirkende Kolben (4) etwa in der Mitte der Länge des Innenrohres (3) angeordnet ist.

6. Kompensator nach den Ansprüchen 1 bis 5, **dadurch gekennzeichnet, daß** sich die den einen Hohlraumabschnitt (9) mit dem Innenraum (15) des Innenrohres (3) verbindende wenigstens eine Bohrung (12) unmittelbar vor der einen Stirnseite (7) des Kolbens (4) befindet.

7. Kompensator nach den Ansprüchen 1 bis 6, **dadurch gekennzeichnet, daß** sich die den anderen Hohlraumabschnitt (10) mit der äußeren Atmosphäre verbindende wenigstens eine Bohrung (11) unmittelbar vor der Stirnfläche (16) des eingesetzten Endes (12) des Außenrohrteils (2a) befindet.

8. Kompensator nach den Ansprüchen 1 bis 7, **dadurch gekennzeichnet, daß** das eine Ende (20) des Innenrohres (3) durch in seiner Wandung (13) angeordnete Dichtungselemente (18) gegen die Innenwand (19) des einen Außenrohrteils (2a) abgedichtet ist und bei an der Stirnfläche (16) des eingesetzten Endes (17) des Außenrohrteils (2a) anstoßendem Kolben (4) noch innerhalb des Außenrohrteils (2a) liegt.

9. Kompensator nach den Ansprüchen 1 bis 8, **dadurch gekennzeichnet, daß** sich das andere Ende (21) des Innenrohres (3) über das Ende (22) des Außenrohrteils (2b) hinaus erstreckt und in einer mit Dichtungselementen (24) versehenen Buchse (23) innerhalb des Außenrohrteils (2b) geführt ist.

10. Kompensator nach Anspruch 9, **dadurch gekennzeichnet, daß** die eine Stirnfläche (25) der Buchse (23), die der einen Stirnseite (7) des Kolbens (4) gegenüberliegt, letzterer als Anschlag bei der Bewegung des Innenrohres (3) in bezug auf das Außenrohr (2) dient.

11. Kompensator nach den Ansprüchen 1 bis 10, **dadurch gekennzeichnet, daß** in das äußere Ende (26) des Außenrohrteils (2a) ein Anschlußnippel (27) mit einem Kupplungsstück (28) für die Herstellung einer Schraubverbindung mit dem Rohrleitungsende eingebaut ist, und daß das äußere Ende (21) des Innenrohres (3) mit einem Anschlußnippel (29) verbunden ist, das ein Kupplungsstück (30) für den Anschluß an die Rohrleitung trägt.

12. Kompensator nach Anspruch 11, **dadurch gekennzeichnet, daß** das Anschlußnippel (29) mit dem äußeren Ende (21) des Innenrohres (3) durch eine Schraubverbindung (31) verbunden ist.

13. Kompensator nach einem der Ansprüche 1 bis 12, **dadurch gekennzeichnet, daß** die beiden Außenrohrteile (2a, 2b) miteinander verschweißt sind.
